# FASCICULE DE BREVET EUROPEEN

(11) **EP 3 084 144 B1**
(45) Date de publication et mention de la délivrance du brevet: **02.08.2017**
(21) Numéro de dépôt: 14828199.1
(22) Date de dépôt: 05.12.2014
(51) Int. Cl.: F01D 5/06, F01D 25/16, F01D 25/00

(54) **DISPOSITIF DE NETTOYAGE D'UN MODULE DE TURBOMACHINE**
VORRICHTUNG ZUR REINIGUNG EINES TURBOMASCHINENMODULS
DEVICE FOR CLEANING A TURBOMACHINE MODULE

(30) Priorité: 16.12.2013 FR 1362725
(43) Date de publication de la demande: 26.10.2016
(73) Titulaire: Safran Aircraft Engines, 75015 Paris (FR)
(72) Inventeur: DOMALAIN, Vincent, F-77550 Moissy-Cramayel cedex (FR); GOURLET, Frédéric, F-77550 Moissy-Cramayel cedex (FR); VAREECKE, Sylvain, F-77550 Moissy-Cramayel cedex (FR)
(74) Mandataire: Gevers & Orès
(86) Numéro de dépôt international: PCT/FR2014/053198
(87) Numéro de publication internationale: WO 2015/092202

(56) Documents cités:
- WO-A1-2005/120953
- US-A- 2 948 092

## Description

### DOMAINE TECHNIQUE

La présente invention concerne un dispositif de nettoyage d'un module de turbomachine, et en particulier un dispositif de dessablage ou de désensablage de ce module.

### ETAT DE L'ART

Lors de son fonctionnement dans certaines zones géographiques, une turbomachine peut absorber une certaine quantité de sable qui, via les différents canaux de ventilation, s'agglomère dans les cavités internes de la turbomachine et en particulier de sa turbine basse pression. Ce mélange peut ensuite se coller sur des parois internes de la turbomachine, en aval de la pièce de combustion.

La couche ainsi formée sur lesdites parois est constituée à la fois de fines particules de sable et d'un agglomérat de sable pollué compacté. La présence de cette couche rend difficile, voire impossible, le contrôle visuel de certaines parties de la turbomachine lors d'opérations de maintenance, en particulier des turbines basse pression et haute pression. Il existe également un risque que ces particules dégradent certains paliers de la turbomachine, qui sont des pièces très sensibles à la pollution.

L'accès à l'espace interne de la turbomachine est restreint et rend difficile le nettoyage des parois concernées, ce qui oblige à réaliser un démontage long et coûteux des différentes parties de la turbomachine afin de pouvoir les nettoyer.

Une turbomachine comprend plusieurs modules majeurs qui sont chacun composés de plusieurs sous-modules. Ainsi, une turbomachine peut comprendre un module majeur de turbine basse pression qui comprend trois sous-modules, un premier sous-module comportant le rotor et le stator de la turbine, un second sous-module comportant l'arbre basse pression, et un troisième sous-module comportant un carter d'échappement. Ce module majeur comprend des disques de rotor qui définissent entre eux des cavités annulaires qui sont difficiles d'accès et donc difficiles à nettoyer. Dans la technique actuelle, il est donc en général nécessaire de démonter au moins partiellement le premier sous-module pour faciliter l'accès aux parois des cavités inter-disques. Ceci présente toutefois de nombreux inconvénients en termes de durée et de coût de l'opération de nettoyage. En effet, la durée de l'opération de nettoyage est rallongée par la durée de démontage du sous-module. Par ailleurs, les critères d'inspection d'un module ou sous-module démonté sont plus stricts que ceux d'un module ou sous-module assemblé. Les opérations de contrôle des pièces démontées sont donc plus longues que celles des pièces assemblées, ce qui rallonge davantage la durée de l'opération de nettoyage.

Une solution à ce problème consisterait à réaliser une opération de nettoyage directement sur un module ou sous-module, en protégeant les pièces sensibles du module ou sous-module, telles que les paliers. Cependant, il n'existe actuellement pas de technologies satisfaisantes qui assurent une protection optimale et efficace des paliers. Un système de nettoyage connu est décrit dans le document US2,948,092. La présente invention apporte une solution simple, efficace et économique à ce besoin.

### EXPOSE DE L'INVENTION

L'invention propose à cet effet un dispositif de nettoyage, et en particulier de dessablage ou de désensablage, d'un module de turbomachine, ce module comportant des disques de rotor définissant entre eux au moins une cavité annulaire à nettoyer, ces disques s'étendant autour d'au moins un palier, le dispositif étant caractérisé en ce qu'il comprend :
- des moyens d'isolement dudit au moins un palier par confinement dans une enceinte fermée et qui est au moins en partie destinée à être entourée par ladite au moins une cavité annulaire à nettoyer,
- des moyens de mise en surpression de ladite enceinte,
- des moyens de décollement de matière déposée sur au moins une paroi de ladite au moins une cavité du module, par exemple par projection d'air comprimé sur cette paroi, et
- des moyens d'aspiration de la matière décollée.

Selon l'invention, le ou les paliers du module sont protégés car ils sont confinés dans une enceinte fermée qui est mise en surpression. Dans la présente demande, on entend par « enceinte en surpression », une enceinte dans laquelle règne une pression supérieure à la pression à l'extérieur de l'enceinte, cette pression extérieure pouvant être la pression ambiante. La matière décollée du module reste donc à l'extérieur de l'enceinte et ne peut donc pas polluer les paliers et son environnement proche du module, ce qui permet de nettoyer le module (tel qu'un module majeur ou au moins un sous-module) sans démontage préalable.

Avantageusement, les moyens de confinement comportent deux organes annulaires configurés pour être montés coaxialement en avant et en arrière du module, respectivement.

De préférence, chacun de ces organes comprend des moyens d'étanchéité annulaires configurés pour coopérer avec un élément annulaire du module.

Un premier de ces organes peut comprendre une jupe annulaire en matériau élastique (tel qu'en élastomère) et qui est élastiquement déformable entre une première position dans laquelle elle est sensiblement cylindrique et une seconde position dans laquelle elle est sensiblement tronconique et est apte à coopérer par sa périphérie externe avec un premier élément annulaire du module, tel que la périphérie interne d'un disque de rotor.

Ce premier organe peut comprendre un corps en matériau plastique. Cet organe est ainsi relativement léger, ce qui facilite sa manipulation. Le corps de l'organe peut être conformé pour épouser la forme de pièces du module. Il peut par exemple comprendre une partie tubulaire destinée à s'étendre autour d'une portion d'arbre du module. Ce premier organe est de préférence un organe arrière ou aval, c'est-à-dire qu'il est monté à l'arrière ou à l'aval du module.

Le premier organe peut comprendre une chambre à air gonflable et expansible radialement, qui est entourée par la jupe annulaire précitée de façon à ce que le gonflage et l'expansion radiale de la chambre à air entraîne la déformation de la jupe de sa première à sa seconde position.

Cette chambre à air peut être équipée d'une valve qui est reliée à une extrémité d'un flexible dont l'extrémité opposée est située sensiblement à une extrémité du premier organe. Dans le cas précité où le premier organe est monté à l'arrière ou à l'aval du module, l'extrémité opposée du flexible est de préférence située à l'extrémité arrière du premier organe de façon à faciliter le raccordement de cette extrémité à des moyens de gonflage de la pièce, tels qu'une pompe.

Un second des organes peut comprendre un fourreau cylindrique configuré pour recevoir un arbre du module. Ce fourreau peut comporter une première extrémité fermée et une seconde extrémité comportant des moyens de fixation, par exemple par emboîtement, sur un second élément annulaire du module, tel qu'une paroi cylindrique du module.

Ce second organe est de préférence un organe avant ou amont, c'est-à-dire qu'il est monté à l'avant ou à l'amont du module. Le fourreau de cet organe peut être réalisé dans un matériau souple et flexible tel qu'un tissu enduit d'une matière plastique. Ce fourreau est de préférence étanche à l'air. Cet organe est ainsi relativement léger, ce qui facilite sa manipulation. Les dimensions du fourreau telles que sa longueur et son diamètre sont notamment fonction de celles de l'arbre à protéger.

La seconde extrémité du fourreau est de préférence reliée à la périphérie interne d'une membrane annulaire dont la périphérie externe comporte lesdits moyens de fixation sur le second élément du module, ladite membrane étant de préférence en matériau élastique, tel qu'en élastomère.

Le fourreau comprend de préférence une valve de surpression. Cette valve permet de limiter la pression à l'intérieur du fourreau et de l'enceinte précitée à une valeur maximale, qui peut être de l'ordre de 2 bars.

Le fourreau peut comprendre des moyens de raccordement aux moyens de mise en surpression de l'enceinte. Ces moyens de surpression comprennent par exemple une pompe qui peut être configurée pour délivrer de l'air comprimé à une pression légèrement supérieure (de quelques dixièmes de bar par exemple) à la pression atmosphérique.

Les moyens d'aspiration comprennent de préférence une cloche configurée pour être montée coaxialement au module et comportant des moyens de raccordement à une unité d'aspiration, tel qu'un aspirateur.

Avantageusement, le dispositif de nettoyage est installé dans une pièce (ou un local) fermée et ventilée dans laquelle a lieu l'opération de nettoyage du module. L'unité d'aspiration est de préférence située à l'extérieur de la pièce et reliée par les moyens de raccordement à la cloche du dispositif. Ces moyens de raccordement traversent alors une paroi de la pièce, cette paroi étant avantageusement équipée d'un clapet.

La cloche peut comporter à son sommet un orifice de passage du fourreau. La cloche entoure ainsi le fourreau ainsi que l'arbre du module logé dans le fourreau.

Les moyens d'aspiration peuvent comprendre en outre un flasque annulaire coaxial à la cloche, ce flasque étant configuré pour être appliqué sur le module et comportant des moyens de guidage en rotation de la cloche autour de son axe. La cloche est ainsi mobile en rotation vis-à-vis du flasque. Dans le cas où le flasque est solidaire en rotation du module, on comprend que la cloche est mobile en rotation vis-à-vis du flasque et du module et, inversement, que le flasque et le module sont mobiles en rotation vis-à-vis de la cloche. Le fourreau précité est monté sur le module et tourne avec le module vis-à-vis de la cloche, dans l'orifice situé au sommet de la cloche.

Avantageusement, la cloche comprend une fenêtre d'accès à ladite au moins une cavité annulaire du module et de manipulation desdits moyens de décollement. Cette fenêtre peut être formée par un secteur angulaire absent de la cloche. La cloche peut ainsi avoir une étendue angulaire de 360°-P autour de son axe longitudinal, P étant l'étendue angulaire de sa fenêtre, qui est par exemple comprise entre 90 et 150°.

De préférence, le dispositif comprend en outre un chariot comportant des moyens de support et de guidage en rotation du module autour de son axe longitudinal qui est orienté sensiblement verticalement. Ce chariot est conçu pour supporter la masse du module, qui peut atteindre plusieurs centaines de kilogrammes. L'opération de nettoyage peut ainsi être réalisée sur ce chariot qui est de préférence équipé de roues pour le déplacement du module, par exemple jusque dans la pièce fermée et ventilée précitée. Le chariot peut être équipé de poignée(s) amovible(s). Ses moyens de guidage en rotation peuvent comprendre un plateau annulaire de support du module, qui est monté libre en rotation sur le chariot par l'intermédiaire d'au moins un palier à roulements. La rotation du module posé sur le plateau peut être provoquée manuellement par au moins un opérateur et/ou motorisée (air comprimé, moteur électrique, etc.).

La présente invention concerne également un procédé de nettoyage, et en particulier de dessablage ou de désensablage, d'un module de turbomachine, ce module comportant des disques de rotor définissant entre eux au moins une cavité annulaire à nettoyer, ces disques s'étendant autour d'au moins un palier, le procédé étant caractérisé en ce qu'il comprend les étapes consistant à :
a) isoler ledit au moins un palier en le confinant dans une enceinte fermée, qui est au moins en partie destinée à être entourée par ladite au moins une cavité annulaire à nettoyer,
b) mettre ladite enceinte en surpression,
c) décoller la matière déposée sur au moins une paroi de ladite au moins une cavité du module, par exemple par projection d'air comprimé sur cette paroi, et aspirer simultanément la matière ainsi décollée.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue schématique en perspective d'un module majeur de turbine basse pression d'une turbomachine,
- la figure 2 est une demi-vue schématique en coupe axiale du module majeur de la figure 1, sans le carter d'échappement,
- la figure 3 est une vue très schématique d'un dispositif de nettoyage selon l'invention,
- la figure 4 est une demi-vue correspondant à celle de la figure 2 et montrant une enceinte de confinement des paliers du module majeur des figures 1 et 2,
- les figures 5 et 6 sont des vues schématiques respectivement en perspective et de côté d'un premier organe de confinement d'un mode de réalisation du dispositif de nettoyage selon l'invention,
- la figure 7 est une vue schématique en perspective d'un second organe de confinement pour le même mode de réalisation du dispositif selon l'invention, et
- la figure 8 est une vue schématique en perspective d'un flasque et d'une cloche d'aspiration pour le même mode de réalisation du dispositif selon l'invention.

### DESCRIPTION DETAILLEE

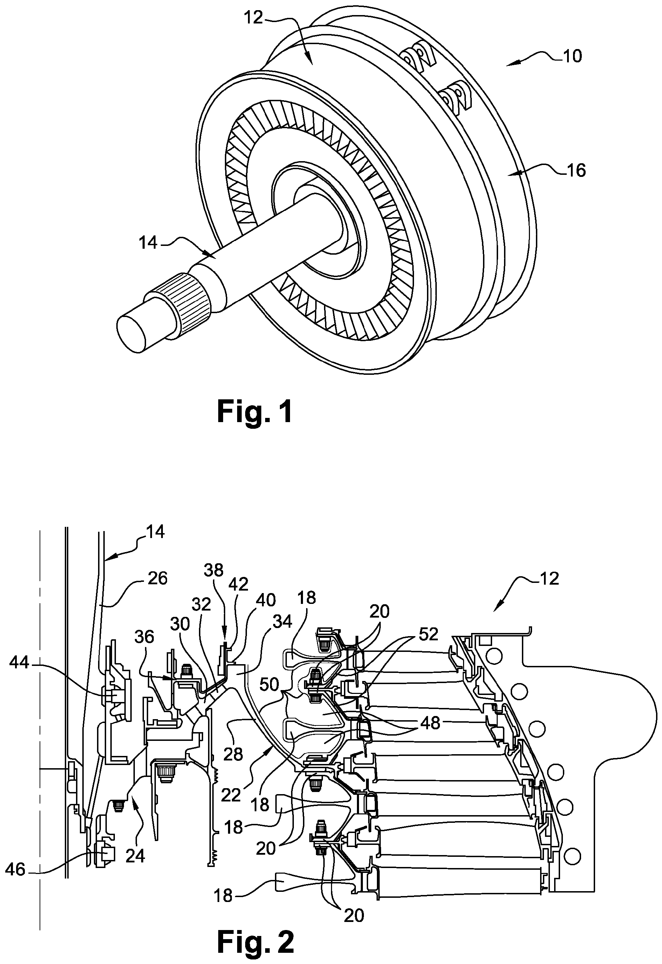

On se réfère d'abord à la figure 1 qui représente un module majeur 10 de turbine basse pression (appelé module MM03 dans le cas d'un moteur CFM56) d'une turbomachine d'aéronef. Ce module majeur comprend trois sous-modules (appelés sous-module « 54 », « 55 » et « 56 » dans l'exemple précité), un premier sous-module 12 comportant le rotor et le stator de la turbine, un deuxième sous-module 14 comportant l'arbre de turbine, et un troisième sous-module 16 comportant un carter d'échappement.

La figure 2 représente une partie des sous-modules 12 et 14, le carter d'échappement n'étant donc pas visible dans cette figure. Le sous-module 12 comprend une pluralité de roues de rotor entre lesquelles sont intercalées dans rangées annulaires d'aubes de stator. Chaque roue de rotor comporte un disque 18 portant à sa périphérie une rangée annulaire d'aubes. Les disques 18 sont disposés coaxialement les uns derrières les autres et comprennent des brides annulaires 20 amont et aval de fixation aux brides des disques adjacents, ainsi qu'à la périphérie externe d'un cône d'entraînement 22. La périphérie interne du cône d'entraînement 22 est fixé à un tourillon 24 solidaire en rotation de l'arbre de turbine 26 du sous-module 14.

Le cône d'entraînement 22 comprend une première paroi tronconique 28 évasée vers l'aval et reliée par son extrémité amont à l'extrémité amont d'une seconde paroi tronconique 30 évasée vers l'amont. Le cône 22 comprend des orifices traversants 32 de circulation d'air, en direction axiale, qui sont ici formés dans sa seconde paroi tronconique 30. La zone annulaire de raccordement des première et seconde parois 28, 30 du cône comprend une nervure cylindrique 34 orientée vers l'amont. Un porte-abradable 36 est fixé en amont du cône 22 et comprend une paroi cylindrique 38 entourée par la nervure 34. Cette paroi cylindrique 38 porte un revêtement abradable sur sa surface cylindrique interne et comporte sur sa surface cylindrique externe un rebord annulaire aval 40 radialement externe d'appui axial sur l'extrémité amont de la nervure 34, et un rebord annulaire amont 42 radialement externe, qui est ici libre.

Le tourillon 24 supporte ici deux paliers à roulements 44, 46. Ces paliers à roulements 44, 46 ont des diamètres nettement inférieurs à ceux des disques 18.

Avant une opération d'inspection visuelle du module majeur 10 ou des sous-modules 12 et 14 assemblés, il peut être nécessaire de le nettoyer par désensablage ou dessablage. Certaines zones du module sont toutefois difficiles d'accès. C'est notamment le cas des cavités annulaires inter-disques 48 situées en amont du cône d'entraînement 22. Les parois latérales des disques 18 et les parois latérales en regard des brides 20 de ces disques peuvent être recouvertes de matière agglomérée composée essentiellement de sables et éventuellement de d'autres éléments de pollution. Les traits épais 50 en figure 2 représentent les zones ou cette matière a tendance à s'accumuler, la référence 52 désignant les endroits particulièrement difficiles d'accès.

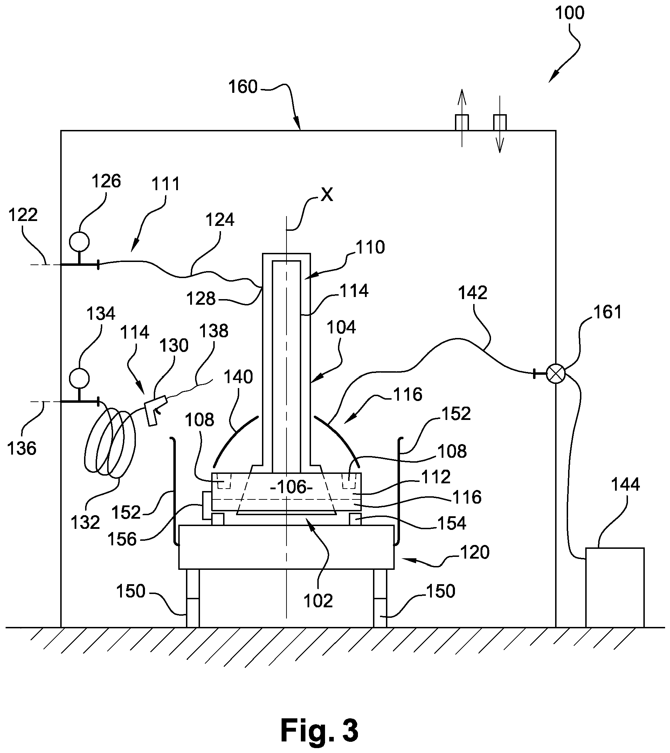

La présente invention propose une solution à ce problème au moyen d'un dispositif de nettoyage 100 dont un mode de réalisation est schématiquement représenté en figure 3.

Pour l'essentiel, le dispositif de nettoyage 100 comprend :
- des moyens 102, 104 d'isolement des paliers à roulements du module 110, par confinement dans une enceinte 106 qui est au moins en partie destinée à être entourée par les cavités annulaires 108 à nettoyer de ce module,
- des moyens 111 de mise en surpression de ladite enceinte 106,
- des moyens 114 de décollement de matière déposée sur les parois des cavités 108, et
- des moyens 116 d'aspiration de la matière ainsi décollée.

Le module 110 est soit un module majeur 10 tel que décrit dans ce qui précède (comportant les sous-modules 12, 14 et 16, ici référencés 112, 114 et 116, respectivement), soit l'ensemble comportant les sous-modules 112, 114, le module 116 comportant le carter d'échappement ayant été démonté et retiré du module majeur.

On constate que le module 110 est disposé verticalement, c'est-à-dire que son axe longitudinal X est orienté verticalement. Le module 110 repose sur un chariot support 120, comme cela sera décrit plus en détail dans ce qui suit.

Les moyens 102, 104 d'isolement des paliers à roulements du module (tels que les paliers 44, 46 représentés en figure 2) comprennent ici deux organes 102, 104 indépendants destinés à être montés respectivement à l'arrière (ou en dessous) du module 110 et à l'avant (ou au dessus) du module. Ces organes 102, 104 sont destinés à coopérer avec des éléments du module pour définir l'enceinte 106 de confinement des paliers.

Dans l'exemple représenté, l'enceinte 106 s'étend sur toute la longueur du module 110 et renferme l'intégralité du sous-module 114, c'est-à-dire l'arbre de turbine, et une partie périphérique interne du sous-module 112 comportant les paliers (voire également une partie périphérique du sous-module 116 si ce dernier est présent). La partie périphérique interne du sous-module 112 est ici schématiquement représentée par des traits pointillés.

On constate que les cavités 108 à nettoyer sont situées à l'extérieur de cette enceinte 106 et sont donc libres d'accès en vue de leur nettoyage. Les cavités 108 s'étendent ici autour de l'enceinte 106.

L'enceinte 106 est fermée et relativement étanche, en particulier à l'air. Elle est destinée à être raccordée aux moyens 111 de mise en surpression, de façon à ce que la pression de l'air dans l'enceinte 106 soit supérieure (de quelques dixièmes de bar, par exemple supérieure de 0,5 à 0,6 bar s) à celle de l'air à l'extérieur de l'enceinte, cette pression extérieure pouvant être la pression ambiante ou atmosphérique.

Les moyens 111 de mise en surpression peuvent comprendre une source 122 d'air comprimé reliée par un flexible 124 et éventuellement un manomètre 126 à un orifice 128 d'alimentation en air comprimé de l'enceinte 106. La source d'air 122 peut être associée à un système de déshuilage/déshumidification pour s'assurer que l'air délivré dans l'enceinte 106 est un air sec, limitant ainsi les risques de corrosion du module 110.

Les moyens 114 de décollement de la matière déposée sur les parois des cavités 108 peuvent être du type à projection d'air comprimé. Ces moyens 114 peuvent comprendre un pistolet 130 à air comprimé qui est raccordé par un flexible 132 et éventuellement un manomètre 134 à une source 136 d'air comprimé (qui délivre de l'air à quelques bars, par exemple à environ 6 bars). L'orifice de projection d'air comprimé du pistolet 130 peut être équipé d'une tige 138 flexible et déformable pouvant être insérée dans les cavités 108 à nettoyer. Cette tige 138 comprend par exemple une âme tubulaire en cuivre recouverte d'une gaine de protection en matériau plastique, cette gaine étant destinée à protéger les pièces du module 110 susceptibles de venir au contact de la tige 138 lors de l'opération de nettoyage.

Les moyens 116 d'aspiration de la matière décollée et qui se détache des parois des cavités 108 comprennent ici une cloche 140 qui est montée sur le module 110, coaxialement à celui-ci, et qui est raccordée par un tuyau flexible 142 à une unité d'aspiration 144. L'unité d'aspiration 144 comprend par exemple un aspirateur, tel que celui commercialisé par la société Nilfisk sous la référence CTS40L (équipé d'un filtre à particules D460*catégorie M). Lé débit d'aspiration d'air est par exemple de l'ordre de 7020L/min.

L'unité d'aspiration 144 est de préférence équipée d'un filtre destiné à retenir les particules aspirées ayant une taille supérieure ou égale à 5µm, qui correspond sensiblement à la taille minimale des grains de sable susceptibles d'être retirés des cavités 108. Les grains de sable retirés de la cavité 108 sont ainsi recueillis dans un filtre et non pas rejetés à l'atmosphère, ce qui est écologique.

Comme expliqué dans ce qui précède, le module 110 peut être monté sur un chariot 120 lors de l'opération de nettoyage. Ce chariot 120 est équipé de roues 150 et de poignées 152, de préférence amovibles, pour faciliter son déplacement. Le chariot 120 comprend un plateau annulaire 154 de support du module et qui est monté libre en rotation. Des moyens de verrouillage 156 peuvent être prévus pour bloquer en rotation le module vis-à-vis du plateau 154. D'autres moyens de verrouillage (non représentés) peuvent être prévus pour bloquer en rotation le plateau 154 vis-à-vis du reste du chariot 120.

Le chariot 120 peut en outre être équipé de moyens de réglage de la hauteur de travail, c'est-à-dire de la hauteur du module 110 après montage sur le chariot. Avant son montage sur le plateau, un outillage (non représenté) est en général monté à l'arrière du module 110 en particulier pour immobiliser le rotor et le stator de la turbine et éviter ainsi qu'ils ne viennent en contact l'un contre l'autre. Le module 110 peut être posé sur le plateau 154 par l'intermédiaire de cet outillage et être en outre immobilisé en rotation vis-à-vis du plateau par l'intermédiaire de cet outillage.

Comme cela sera expliqué dans ce qui suit, la cloche 140 est mobile en rotation vis-à-vis du module 110. Un opérateur peut ainsi déplacer en rotation le module 110 autour de son axe X, vis-à-vis du chariot 120, en maintenant immobile la cloche 140. La description qui suit comprendra un exemple complet de procédé de nettoyage du module 110 et d'utilisation du dispositif 100 selon l'invention.

Comme cela est schématiquement représenté dans le dessin, l'opération de nettoyage est de préférence réalisée dans une pièce 160 fermée et ventilée, dans laquelle est logé le dispositif de nettoyage 100 selon l'invention. La pièce 160 a par exemple une forme parallélépipédique dont les murs ou parois latérales portent :
- des moyens de raccordement du flexible 124 et/ou du manomètre 126, situés à l'intérieur de la pièce 160, à la source 122 d'air comprimé, qui est située à l'extérieur de la pièce,
- des moyens de raccordement du flexible 132 et/ou du manomètre 134, situés à l'intérieur de la pièce 160, à la source 136 d'air comprimé, qui est située à l'extérieur de la pièce,
- des moyens 161 de raccordement du tuyau 142 situés à l'intérieur de la pièce 160, à l'unité d'aspiration 144, qui est située à l'extérieur de la pièce; ces moyens de raccordement 161 peuvent comprendre un clapet monté dans la paroi de la pièce 160.

La pièce 160 est aérée et ventilée par circulation d'air.

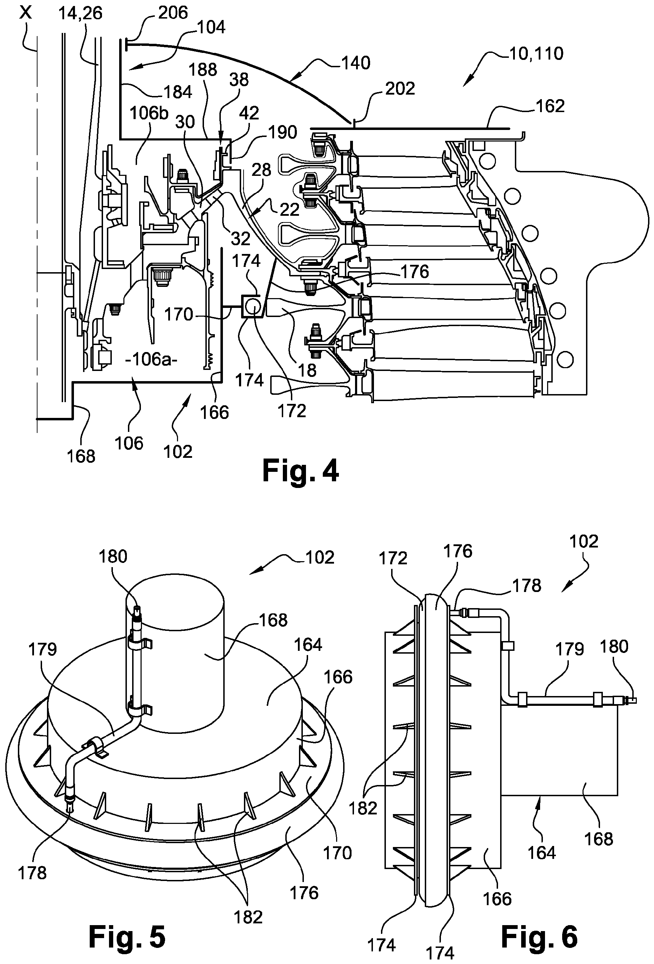

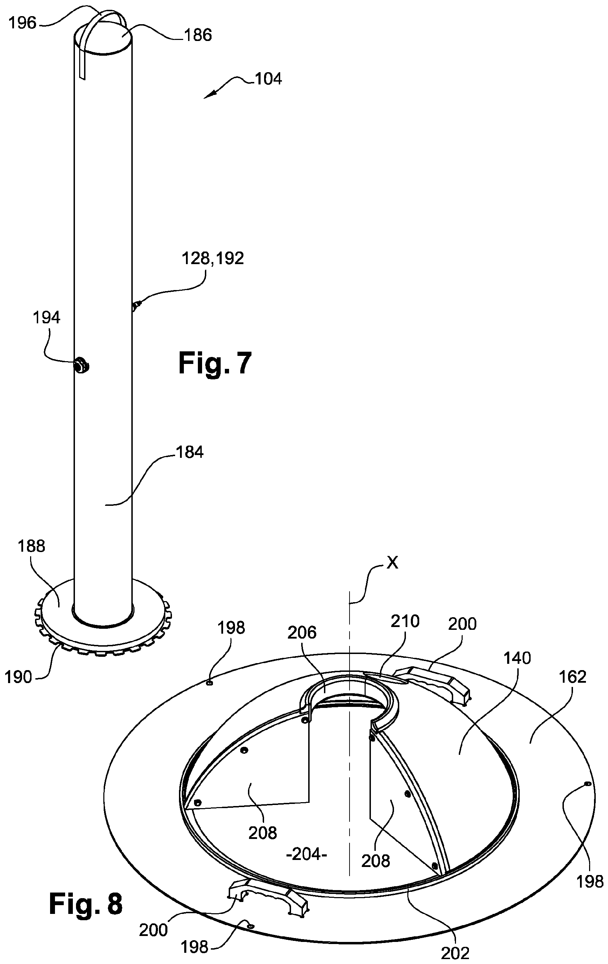

Les figures 5 à 8 représentent un mode de réalisation plus concret du dispositif de nettoyage 100 selon l'invention. Les figures 5 et 6, d'une part, et la figure 7, d'autre part, représentent respectivement les organes arrière 102 et avant 104, précités. La figure 8 représente la cloche 140 et un flasque 162 de support et de guidage en rotation de cette cloche 140.

On se réfère d'abord aux figures 5 et 6 qui représentent l'organe ou obturateur arrière 102, c'est-à-dire l'organe qui est destiné à être monté à l'arrière du module 110 (qui est son extrémité inférieure dans la position du module telle que représentée en figure 3).

Cet organe 102 comprend un corps 164, de préférence en matériau plastique. Ce corps 164 comprend deux parties respectivement avant 166 et arrière 168, qui ont chacune une forme cylindrique tubulaire, la partie avant ayant un diamètre externe supérieur à celui de la partie arrière. Chacune de ces parties est destinée à entourer et protéger un élément différent de la partie arrière du module 110.

La figure 4 montre l'organe 102 en position de montage à l'arrière du module 10, 110. La partie arrière 168 de plus petit diamètre du corps 164 entoure une portion arrière d'arbre de turbine et sa partie avant 166 de plus grand diamètre entoure une paroi cylindrique solidaire du tourillon 24. La partie arrière 168 est fermée à son extrémité arrière par une paroi radiale. La partie arrière 168 est reliée à son extrémité avant par une autre paroi radiale à l'extrémité arrière de la partie avant 166 du corps.

La partie avant 166 du corps comprend une couronne annulaire 170 comportant à sa périphérie externe une gorge annulaire radialement externe de logement d'une chambre à air 172 gonflable. La gorge de réception de la chambre à air 172 est délimitée axialement par deux parois annulaires 174 radialement externes de la couronne 170. Lorsque la chambre à air 172 n'est pas ou est peu gonflée, elle est complètement logée dans la gorge de la couronne 170. Lorsqu'elle est gonflée, elle fait saillie radialement à l'extérieur de la gorge de la couronne 170.

Une jupe annulaire 176 élastiquement déformable s'étend autour de la gorge de la couronne 170 et comprend une extrémité arrière fixée sur la périphérie externe de la paroi annulaire arrière 174. Cette jupe 176 est de préférence réalisée en élastomère et est destinée à se déformer lorsque la chambre à air 172 est gonflée et se dilate radialement vers l'extérieur de la gorge. La jupe 176 est ainsi déplaçable depuis une position de repos où elle est sensiblement cylindrique et une position déformée élastiquement où elle a une forme sensiblement tronconique, son extrémité avant ayant alors un diamètre supérieur à celui de son extrémité arrière, comme représenté en figure 6.

La chambre à air 172 comprend une valve d'alimentation 178 qui est raccordée à l'extrémité d'un flexible 179 qui s'étend le long du corps 164 et dont l'extrémité opposée à la chambre à air 172 est située au niveau de l'extrémité arrière du corps et comprend un embout 180 de raccordement à une pompe (non représentée) de gonflage de la chambre à air. Le flexible 179 est fixé sur le corps par des moyens appropriés. Le corps 164 peut comprendre des moyens de renfort qui sont disposés entre la couronne et la partie avant (référence 182) et entre les parties avant et arrière du corps (non représentés).

La figure 4 montre que, en position de montage de l'organe arrière 102 et lorsque la jupe 176 a une forme tronconique (chambre à air 172 gonflée), la jupe 176 peut prendre appui axialement sur le cône 22 et/ou radialement sur la périphérie interne d'un disque 18 du module 10, 110. La jupe 176 a une double fonction. Elle coopère avec la périphérie interne du disque 18 d'une part pour assurer une étanchéité entre l'organe 102 et ce disque, et d'autre part pour assurer la retenue de l'organe 102 vis-à-vis du disque et donc du module 10, 110. En effet, l'organe 102 est monté à l'arrière du module par translation axiale vers le module 10, 110, jusqu'à ce que sa jupe 176 prenne appui axialement sur le cône 22. La chambre à air 172 est alors gonflée ce qui entraîne la déformation élastique de la jupe 176. Cette dernière peut alors venir en appui sur la périphérie interne du disque 18 pour empêcher le retrait axial vers l'arrière de l'organe 102. Dans le cas où le module 110 est disposé verticalement, comme décrit dans ce qui précède, la coopération de la jupe 176 de l'organe 102 avec le disque 18 empêche l'organe de chuter. La jupe a également pour rôle de protéger la chambre à air 172. Cet appui de la jupe 176 sur le disque 18 suffit donc à maintenir l'organe 102 en place sur le module 10, 110.

On se réfère maintenant à la figure 7 qui représente l'organe ou obturateur avant 104, c'est-à-dire l'organe qui est destiné à être monté à l'avant du module 110 (qui est son extrémité supérieure dans la position du module telle que représentée en figure 3).

Cet organe 104 comprend un fourreau 184, de préférence en matériau souple et flexible, dont une extrémité 186 est fermée et dont l'autre extrémité est reliée à une membrane annulaire 188 qui est de préférence réalisée dans un matériau élastiquement déformable tel qu'en élastomère. Le fourreau 184 est relié à la périphérie interne de la membrane 188 dont la périphérie externe comprend un rebord cylindrique 190 de montage, de préférence par emboîtement, sur un élément du module 10, 110.

La figure 4 montre l'organe 104 en position de montage à l'avant du module 10, 110. Le fourreau 184 s'étend autour de l'arbre de turbine 26 du sous-module 114, sur toute la longueur de celui-ci, et la membrane 188 située ici à l'extrémité inférieure du fourreau a son rebord 190 qui est engagé sur la paroi cylindrique 38 précitée du module 10, 110 et qui comprend de préférence une rainure annulaire radialement interne dans laquelle est engagé le rebord radial externe 42 de la paroi 38. Ceci assure d'une part une étanchéité entre l'organe 104 et la paroi 38 et d'autre part une retenue axiale de l'organe 104 vis-à-vis de la paroi 38 et donc du module 10, 110.

En position de montage, les deux organes 102, 104 définissent avec des éléments du module une enceinte 106 fermée et relativement étanche à l'air. On constate en figure 4 que les éléments qui participent à la délimitation de l'enceinte 106 sont notamment le cône d'entraînement 22 et en particulier sa première paroi tronconique 28 et une partie du rotor du sous-module 12, 112. On constate également que l'enceinte 106 comprend deux parties, une partie inférieure 106a délimitée entre l'organe arrière 102 et la seconde paroi tronconique 30 du cône 212 et une partie supérieure 106b délimitée entre l'organe avant 104 et la seconde paroi tronconique 30 du cône 22. Les parties 106a, 106b de l'enceinte 106 communiquent entre elles, notamment par les orifices traversants 32 de la seconde paroi tronconique 30 du cône 22. La partie supérieure 106b de l'enceinte comprend l'espace contenu dans le fourreau 184.

Comme cela est visible en figure 7, le fourreau 184 comprend l'orifice 128 précité qui est ici équipé d'un embout 192 de raccordement de l'enceinte 106 aux moyens de surpression 112, c'est-à-dire à la source 122 précitée d'alimentation en air comprimé à une pression supérieure à celle de la pression atmosphérique à l'extérieur de l'enceinte 106. On comprend que l'alimentation en air comprimé et la surpression de l'espace interne du fourreau 184 va entraîner la surpression des parties 106a, 106b de l'enceinte 106, du fait de leur communication entre elles.

Le fourreau 184 comprend également une valve de surpression 194 qui limite la pression à l'intérieur de l'enceinte 106 à une valeur maximale, tel que par exemple 2 bars. Le fourreau 184 comprend en outre à son extrémité supérieure une sangle 196 dont une extrémité est fixée au fourreau et dont l'autre extrémité peut comprendre un système de fixation au fourreau du type Velcro®. Cette sangle est avantageusement utilisée pour maintenir et guider le flexible 124.

Le matériau du fourreau 184 comprend de préférence un tissu revêtu d'une matière plastique étanche à l'air.

On se réfère enfin à la figure 8 qui représente une partie des moyens d'aspiration 116 du dispositif 100 selon l'invention, et en particulier la cloche 140 d'aspiration et le flasque 162 de support et de guidage en rotation de la cloche autour de son axe X.

Le flasque 162 a une forme annulaire et plane et est destiné à être posé sur le module 10, 110 en avant de celui-ci, de façon à recouvrir l'entrée de la veine de turbine, comme cela est représenté en figure 4. Il est ainsi destiné à s'étendre au-dessus des rangées d'aubes de rotor et de stator de la turbine, son diamètre interne étant de préférence inférieur au diamètre interne des aubes et son diamètre externe étant de préférence supérieur au diamètre externe des aubes.

Le flasque 162 comprend des moyens de détrompage destinés à coopérer avec le module pour assurer un positionnement correct du flasque vis-à-vis du module 110. Dans l'exemple représenté, le flasque 162 porte des pions de centrage 198 qui sont en saillie sur la face inférieure du flasque et sont destinés à être engagés dans des orifices du module tels que des orifices de passage de boulons.

Le flasque 162 comprend également des poignées 200 de manipulation.

Le flasque 162 comprend en outre à sa périphérie interne un rail 202 de centrage et de guidage en rotation de la cloche 140 autour de l'axe X.

La cloche 140 a ici une forme générale hémisphérique et est en outre sectorisée, un secteur de cloche étant absent pour définir une fenêtre 204 d'accès aux cavités 108 à nettoyer du module 110 et de manipulation du pistolet 130.

La cloche 140 coopère par son extrémité inférieure de plus grand diamètre avec le rail 202 situé à la périphérie interne du flasque 162. L'extrémité supérieure ou sommet de plus petit diamètre de la cloche définit un col 206 de passage de l'arbre 26 du sous-module 14 ainsi que du fourreau 184 de l'organe 104. Le col 206 comprend une paroi cylindrique de longueur (le long de l'axe X) suffisante pour limiter le risque d'usure du fourreau 184 lors de sa rotation vis-à-vis de la cloche 140.

La fenêtre 204 de la cloche 140 est délimitée latéralement par deux parois 208 ayant une orientation sensiblement radiale par rapport à l'axe X.

La cloche 140 comprend un orifice 210 de raccordement à une extrémité du tuyau flexible 142 précité (figure 2) dont l'extrémité opposée est raccordée à l'unité d'aspiration 144.

Le flasque 162 peut être réalisé en matériau plastique, tel que par exemple en téflon® (PTFE). La cloche 140 (y compris ses parois 208) est de préférence réalisée dans un matériau transparent tel que par exemple en plexiglass® (PMMA). L'opérateur peut ainsi visualiser des parties du module 10, 110 en cours de nettoyage, à travers le matériau de la cloche 140.

Le dispositif 100 selon l'invention peut être utilisé de la façon suivante. Autrement dit, une opération ou un procédé de nettoyage peut se dérouler de la façon suivante, à l'aide du dispositif 100 selon l'invention.

Les organes 102, 104 sont montés l'un après l'autre sur le module 10, 110. L'organe arrière 102 (avec sa chambre à air 172 dégonflée ou partiellement gonflée) est monté comme indiqué dans ce qui précède, en l'engageant à l'arrière du module jusqu'à ce que sa jupe 176 prenne appui axialement sur le cône 22, puis en gonflant la chambre à air 172 au moyen d'une pompe, de façon à déformer sa jupe 176 qui adopte alors une forme tronconique et peut venir en appui sur le disque 18 pour assurer la retenue de l'organe 102 vis-à-vis du module 10, 110. L'organe avant 104 est monté comme indiqué dans ce qui précède, en enfilant le fourreau 184 sur l'arbre 26 comme une chaussette, puis en fixant le rebord 190 de la membrane 188 sur la paroi cylindrique 38 du module 10, 110.

Le module 10, 110 est ensuite positionné sur le chariot 120 et en particulier sur le plateau mobile 154 de ce chariot (figure 3). Le plateau 154 est verrouillé de façon à l'empêcher de tourner sur le chariot lors de cette opération. Le module 10, 110 est ensuite verrouillé de façon à le bloquer en rotation vis-à-vis du plateau 154, par l'intermédiaire des moyens 156 (figure 3). Le chariot 120 est ensuite amené dans la pièce 160 dans laquelle doit être réalisée l'opération de nettoyage. Ses roues 150 sont alors bloquées pour l'immobiliser au milieu de la pièce. Les poignées 152 du chariot peuvent être retirées pour faciliter l'opération de nettoyage.

Le flasque 162 est monté autour du fourreau 184 et posé et centré sur le module 10, 110, puis la cloche 140 est montée autour du fourreau 184 et posée et centrée sur le flasque 162. Une extrémité du tuyau flexible 142 est alors engagée dans l'orifice 210 de la cloche 140 (figure 8) et une extrémité du flexible 124 est raccordée à l'embout 192 du fourreau 184 (figure 7).

L'opération de nettoyage des cavités 108 du module 10, 110 peut alors commencer. La source 122 est activée de façon à mettre l'enceinte 106 en surpression. Du fait de cette surpression, l'organe arrière 102 est appliqué avec une force supérieure sur le disque 18 du module, ce qui participe ainsi à l'étanchéité à ce niveau. Par ailleurs, le fourreau 184 se gonfle et adopte une forme sensiblement cylindrique, et est entouré avec un faible jeu radial par le col 206 de la cloche 140 (figure 8).

L'unité d'aspiration 144 est mise en marche ce qui crée une dépression dans la cloche 140, destinée à aspirer la matière décollée lors du nettoyage, qui est alors évacuée par le tuyau 142 jusqu'à l'unité 144 située à l'extérieur de la pièce.

L'alimentation en air comprimé du pistolet 130 est activée et un opérateur peut manipuler le pistolet dans la fenêtre 204 de la cloche 140 pour retirer la matière précitée. Pour cela, la tige 138 du pistolet est insérée dans chaque cavité 108 à nettoyer et l'opérateur appuie sur la gâchette du pistolet 130 de façon à ce que de l'air comprimé soit projeté sur les parois des cavités, de préférence dans des directions sensiblement tangentes à ces parois. La matière décollée par la projection d'air comprimé est alors tout de suite aspirée par la cloche 140 et évacuée par le tuyau 142. L'opérateur peut utiliser un goupillon pour forcer la matière à se décoller, ce goupillon (non représenté) comportant de préférence des poils en nylon pour ne pas abimer les pièces du module. L'opérateur pourra également utiliser un produit pétrolier sous forme liquide ou de lingettes imbibées afin de faciliter le décollement du sable et des éléments de pollution.

L'opérateur peut déplacer manuellement en rotation le module 10, 110 sur le chariot 120. La cloche 140 restant alors immobile et le fourreau 184 tournant à l'intérieur de la cloche 140 en même temps que le module 10, 110. Il est toutefois envisageable que cette rotation soit réalisée au moyen d'un moteur. Le tuyau 142 peut être maintenu en position à l'aide d'un bras télescopique (non représenté) fixé à une paroi de la pièce 160.

L'opérateur est de préférence équipé d'une combinaison intégrale, d'un casque antibruit et d'un masque pressurisé, pendant toute la durée de l'opération de nettoyage.

Bien entendu, les moyens de confinement décrits dans ce qui précède sont adaptés à la configuration du module à nettoyer. Il est ainsi envisageable que l'organe arrière 102 de ces moyens de confinement soient remplacés par de simples bouchons en caoutchouc destinés à obturer des orifices d'un outillage monté à l'arrière du module, et par exemple en arrière du carter d'échappement d'un module majeur de turbine basse pression. L'utilisation d'un système d'obturation permettant d'obturer la partie aval du module 12 et amont du module 16 peut également être nécessaire.

## Revendications

1. Dispositif (100) de nettoyage, et en particulier de dessablage ou de désensablage, d'un module (10, 110) de turbomachine, ce module comportant des disques de rotor (18) définissant entre eux au moins une cavité annulaire (48, 108) à nettoyer, ces disques s'étendant autour d'au moins un palier (44, 46), le dispositif comprenant:
- des moyens (114) de décollement de matière déposée sur au moins une paroi de ladite au moins une cavité du module, par exemple par projection d'air comprimé et **caractérisé par**:
- des moyens (102, 104) d'isolement dudit au moins un palier par confinement dans une enceinte (106) fermée et qui est au moins en partie destinée à être entourée par ladite au moins une cavité annulaire à nettoyer,
- des moyens (112) de mise en surpression de ladite enceinte, et
- des moyens (116) d'aspiration de la matière décollée.

2. Dispositif (100) selon la revendication 1, **caractérisé en ce que** les moyens de confinement comportent deux organes annulaires (104, 102) configurés pour être montés coaxialement en avant et en arrière du module, respectivement.

3. Dispositif (100) selon la revendication 2, **caractérisé en ce que** chacun des organes (104, 102) comprend des moyens (190, 176) d'étanchéité annulaires configurés pour coopérer avec un élément annulaire du module.

4. Dispositif (100) selon la revendication 2 ou 3, **caractérisé en ce qu'**un premier des organes (102) comprend une jupe annulaire (176) en matériau élastique et qui est élastiquement déformable entre une première position dans laquelle elle est sensiblement cylindrique et une seconde position dans laquelle elle est sensiblement tronconique et est apte à coopérer par sa périphérie externe avec un premier élément annulaire du module, tel que la périphérie interne d'un disque de rotor (18).

5. Dispositif (100) selon la revendication 4, **caractérisé en ce que** le premier organe (102) comprend une chambre à air (172) gonflable et expansible radialement, qui est entourée par la jupe annulaire (176) de façon à ce que le gonflage et l'expansion radiale de la chambre à air entraîne la déformation de la jupe de sa première à sa seconde position.

6. Dispositif (100) selon la revendication 5, **caractérisé en ce que** la chambre à air (172) est équipée d'une valve (178) qui est reliée à une extrémité d'un flexible (179) dont l'extrémité opposée est située sensiblement à une extrémité du premier organe (102).

7. Dispositif (100) selon l'une des revendications 2 à 6, **caractérisé en ce qu'**un second des organes (104) comprend un fourreau cylindrique (184) configuré pour recevoir un arbre (26) du module, ce fourreau comportant une première extrémité (186) fermée et une seconde extrémité (188) comportant des moyens (190) de fixation, par exemple par emboîtement, sur un second élément annulaire du module, tel qu'une paroi cylindrique (38) du module.

8. Dispositif (100) selon la revendication 7, **caractérisé en ce que** la seconde extrémité du fourreau (184) est reliée à la périphérie interne d'une membrane annulaire (188) dont la périphérie externe comporte lesdits moyens (190) de fixation sur le second élément du module, ladite membrane étant de préférence en matériau élastique.

9. Dispositif (100) selon la revendication 7 ou 8, **caractérisé en ce que** le fourreau (184) comprend une valve de surpression (194) et/ou des moyens (192) de raccordement aux moyens (112) de mise en surpression.

10. Dispositif (100) selon l'une des revendications précédentes, **caractérisé en ce que** les moyens d'aspiration (116) comprennent une cloche (140) configurée pour être montée coaxialement au module (10, 110) et comportant des moyens (210, 142) de raccordement à une unité d'aspiration (144).

11. Dispositif (100) selon la revendication 10, en dépendance de la revendication 7, 8 ou 9, **caractérisé en ce que** la cloche (140) comporte à son sommet un orifice de passage du fourreau (184).

12. Dispositif (100) selon la revendication 10 ou 11, **caractérisé en ce que** les moyens d'aspiration (116) comprennent en outre un flasque annulaire (162) coaxial à la cloche (140), ce flasque étant configuré pour être appliqué sur le module (10, 110) et comportant des moyens (202) de guidage en rotation de la cloche autour de son axe (X).

13. Dispositif (100) selon l'une des revendications 10 à 12, **caractérisé en ce que** la cloche (140) comprend une fenêtre (204) d'accès à ladite au moins une cavité annulaire (48, 108) du module et de manipulation desdits moyens de décollement (114).

14. Dispositif (100) selon l'une des revendications précédentes, **caractérisé en ce qu'**il comprend un chariot (120) comportant des moyens (154) de support et de guidage en rotation du module (10, 110) autour de son axe longitudinal (X) qui est orienté sensiblement verticalement.

15. Procédé de nettoyage, et en particulier de dessablage ou de désensablage, d'un module (10, 110) de turbomachine, ce module comportant des disques de rotor (18) définissant entre eux au moins une cavité annulaire (48, 108) à nettoyer, ces disques s'étendant autour d'au moins un palier (44, 46), le procédé comprenant les étapes consistant à :
a) isoler ledit au moins un palier en le confinant dans une enceinte (106) fermée,
b) mettre ladite enceinte en surpression,
c) décoller la matière déposée sur au moins une paroi de ladite au moins une cavité du module, par exemple par projection d'air comprimé sur cette paroi, et aspirer simultanément la matière ainsi décollée.

## Patentansprüche

1. Vorrichtung (100) zur Reinigung, insbesondere zur Sandentfernung oder zur Sandsäuberung, von einem Modul (10, 110) einer Turbomaschine, wobei das Modul Rotorscheiben (18) umfasst, die zwischen ihnen mindestens einen ringförmigen Hohlraum (48, 108) definieren, der gereinigt werden soll, wobei sich diese Scheiben zumindest um ein Lager (44, 46) erstrecken, wobei die Vorrichtung umfasst:
- Mittel (114) zum Ablösen von Material, das auf mindestens einer Wand des mindestens einen Hohlraums des Moduls beispielsweise durch Blasen von Druckluft aufgebracht ist, und **gekennzeichnet dadurch**:
- Mittel (102, 104) zum Isolieren des mindestens einem Lagers durch Einschluss in einem Behälter (106), der geschlossen ist und zumindest teilweise dazu bestimmt ist, durch den mindestens einen ringförmigen Hohlraum, der gereinigt werden soll, umgeben zu werden,
- Mittel (112) zum Setzen von dem Behälter unter Überdruck und
- Mittel (116) zur Absaugung des gelösten Materials.

2. Vorrichtung (100) nach Anspruch 1, **dadurch gekennzeichnet, dass** die Mittel zum Einschließen zwei ringförmige Organe (104, 102) umfassen, die konfiguriert sind, um koaxial vor bzw. hinter dem Modul angebracht zu werden.

3. Vorrichtung (100) nach Anspruch 2, **dadurch gekennzeichnet, dass** jedes Organ (104, 102) ringförmige Dichtmittel (190, 176) umfasst, die konfiguriert sind, um mit einem ringförmigen Element des Moduls zusammenzuwirken.

4. Vorrichtung (100) nach Anspruch 2 oder 3, **dadurch gekennzeichnet, dass** ein erstes der Organe (102) eine ringförmige Schürze (176) umfasst, die aus einem elastischen Material besteht und die zwischen einer ersten Position, in der sie im Wesentlichen zylindrisch ist, und einer zweiten Position elastisch verformbar ist, in der sie im Wesentlichen kegelstumpfförmig ist und fähig ist, durch seinen äußeren Rand mit einem ersten ringförmigen Element des Moduls wie dem inneren Umfang einer Rotorscheibe (18) zusammenzuwirken.

5. Vorrichtung (100) nach Anspruch 4, **dadurch gekennzeichnet, dass** das erste Organ (102) eine aufblasbare und radial ausdehnbare Luftkammer (172) umfasst, die von der ringförmigen Schürze (176) umgeben ist, so dass das Aufblasen und die radiale Ausdehnung der Luftkammer eine Verformung der Schürze von seiner ersten in seine zweite Position bewirkt.

6. Vorrichtung (100) nach Anspruch 5, **dadurch gekennzeichnet, dass** die Luftkammer (172) mit einem Ventil ausgestattet ist (178), das mit einem Ende eines Schlauches (179) verbunden ist, dessen gegenüberliegendes Ende sich im Wesentlichen an einem Ende des ersten Organs (102) befindet.

7. Vorrichtung (100) nach einem der Ansprüche 2 bis 6, **dadurch gekennzeichnet, dass** ein zweites der Organe (104) eine zylindrische Hülse (184) umfasst, die konfiguriert ist, eine Welle (26) des Moduls aufzunehmen, wobei die Hülse ein erstes geschlossenes Ende (186) und ein zweites Ende (188) umfasst, das Mittel (190) zur Befestigung beispielsweise durch Eingreifen in ein zweites ringförmiges Organ des Moduls wie beispielsweise eine zylindrische Wand (38) des Moduls umfasst.

8. Vorrichtung (100) nach Anspruch 7, **dadurch gekennzeichnet, dass** das zweite Ende der Hülse (184) mit dem inneren Umfang einer ringförmigen Membran (188) verbunden ist, deren äußerer Umfang die Mittel (190) zur auf Befestigung an dem zweiten Organ des Moduls umfasst, wobei die Membran vorzugsweise aus einem elastischen Material besteht.

9. Vorrichtung (100) nach Anspruch 7 oder 8, **dadurch gekennzeichnet, dass** die Hülse (184) ein Überdruckventil (194) und / oder Mittel (192) zur Verbindung mit den Mitteln (112) zum Setzen unter Überdruck aufweist.

10. Vorrichtung (100) nach einem der vorhergehenden Ansprüche, **dadurch gekennzeichnet, dass** die Saugmittel (116) eine Glocke (140) umfassen, die konfiguriert ist, koaxial an dem Modul (10,110) angebracht zu werden, und Mittel (210, 142) zur Verbindung mit einer Saugeinheit (144) umfasst.

11. Vorrichtung (100) nach Anspruch 10, abhängig von Anspruch 7, 8 oder 9, **dadurch gekennzeichnet, dass** die Glocke (140) an ihrem Höhepunkt eine Öffnung zur Durchführung der Hülse (184) umfasst.

12. Vorrichtung (100) nach Anspruch 10 oder 11, **dadurch gekennzeichnet, dass** die Mittel (116) zur Absaugung ferner einen ringförmigen Flansch (162) umfassen, der koaxial zu der Glocke (140) ist, wobei der Flansch konfiguriert ist, um auf dem Modul (10, 110) angebracht zu werden, und Mittel (202) zur Drehführung der Glocke um ihre Achse (X) umfasst.

13. Vorrichtung (100) nach einem der Ansprüche 10 bis 12, **dadurch gekennzeichnet, dass** die Glocke (140) ein Fenster (204) zum Zugang zu dem mindestens einen ringförmigen Hohlraum (48, 108) des Moduls und zur Handhabung der Mittels (114) zum Ablösen umfasst.

14. Vorrichtung (100) nach einem der vorhergehenden Ansprüche, **dadurch gekennzeichnet, dass** sie einen Schlitten (120) umfasst, der Mittel (154) zur Abstützung und Drehführung des Moduls (10, 110) um seine Längsachse (X) umfasst, die im Wesentlichen vertikal ausgerichtet ist.

15. Verfahren zur Reinigung, insbesondere zur Sandentfernung oder zur Sandsäuberung, von einem Modul (10, 110) einer Turbomaschine, wobei das Modul Rotorscheiben (18) umfasst, die zwischen ihnen mindestens einen ringförmigen Hohlraum (48, 108) definieren, der gereinigt werden soll, wobei sich diese Scheiben zumindest um ein Lager (44, 46) erstrecken, wobei das Verfahren Schritte umfasst, die bestehen in:
a) Isolieren des mindestens einem Lagers durch Einschluss in einem geschlossenen Behälter (106),
b) Setzen von dem Behälter unter Überdruck,
c) Ablösen von Material, das auf mindestens einer Wand des mindestens einen Hohlraums des Moduls beispielsweise durch Blasen von Druckluft auf die Wand aufgebracht ist, und gleichzeitiges Absaugen des so abgelösten Materials.

## Claims

1. Device (100) for cleaning, and in particular removing grit and sand, from a turbomachine module (10, 110), this module comprising rotor discs (18) defining between them at least one annular cavity (48, 108) to be cleaned, these discs extending around at least one bearing (44, 46), the device comprising:
- means (114) for detaching matter deposited on at least one wall of said at least one cavity of the module, for example by projecting compressed air and **characterised by**:
- means (102, 104) of isolating said at least one bearing by confinement in a closed enclosure (106) and which is at least in part intended to be surrounded by said at least one annular cavity to be cleaned,
- means (112) for pressurising said enclosure,
and
- means (116) for sucking away the detached matter.

2. Device (100) according to claim 1, **characterised in that** the means of confinement comprises two annular parts (104, 102) configured to be mounted coaxially in front and behind the module, respectively.

3. Device (100) according to claim 2, **characterised in that** each of the parts (104, 102) comprises annular sealing means (190, 176) configured to cooperate with an annular element of the module.

4. Device (100) according to claim 2 or 3, **characterised in that** a first of the parts (102) comprises an annular skirt (176) in elastic material and which is elastically deformable between a first position in which it is substantially cylindrical and a second position in which it is substantially conical and capable of cooperating by its external periphery with a first annular element of the module, like the internal periphery of a rotor disc (18).

5. Device (100) according to claim 4, **characterised in that** the first part (102) comprises an inflatable air tube (172) that is radially expansible, which is surrounded by the annular skirt (176) such that the inflation and radial expansion of the air tube causes the deformation of the skirt from its first to its second position.

6. Device (100) according to claim 5, **characterised in that** the air tube (172) is equipped with a valve (178) which is connected to one end of a hose (179) whose opposite end is located substantially at one end of the first part (102).

7. Device (100) according to any one of claims 2 to 6, **characterised in that** a second of the parts (104) comprises a cylindrical sleeve (184) configured to receive a shaft (26) of the module, this sleeve comprising a first closed end (186) and a second end (188) comprising fixing means (190), for example by interlocking, on a second annular element of the module, like a cylindrical wall (38) of the module.

8. Device (100) according to claim 7, **characterised in that** the second end of the sleeve (184) is connected to the internal periphery of an annular membrane (188) whose external periphery comprises said fixing means (190) on the second element of the module, said membrane being preferably in elastic material.

9. Device (100) according to claim 7 or 8, **characterised in that** the sleeve (184) comprises a pressurising valve (194) and/or the means (192) of connection to the pressurising means (112).

10. Device (100) according to any one of the previous claims, **characterised in that** the suction means (116) comprise a cloche (140) configured to be mounted coaxially with the module (10, 110) and comprising the means (210, 142) of connection to a suction unit (144).

11. Device (100) according to claim 10, depending on claim 7, 8 or 9, **characterised in that** the cloche (140) comprises at its summit an orifice for passing the sleeve (184).

12. Device (100) according to claim 10 or 11, **characterised in that** the suction means (116) further comprise an annular flange (162) coaxial with the cloche (140), this flange being configured to be applied onto the module (10, 110) and comprising means (202) of guiding the cloche in rotation around its axis (X).

13. Device (100) according to any one of claims 10 to 12, **characterised in that** the cloche (140) comprises a window (204) for access to said at least one annular cavity (48, 108) of the module and for manipulating said detaching means (114).

14. Device (100) according to any one of the previous claims, **characterised in that** it comprises a carriage (120) comprising the means (154) for supporting and guiding in rotation the module (10, 110) around its longitudinal axis (X) which is oriented substantially vertically.

15. Process for cleaning, and in particular removing grit and sand, from a turbomachine module (10, 110), this module comprising rotor discs (18) defining between them at least one annular cavity (48, 108) to be cleaned, these discs extending around at least one bearing (44, 46), the method comprising the steps consisting in:
a) isolating said at least one bearing by confining it in a closed enclosure (106),
b) pressurising said enclosure,
c) detaching the matter deposited on at least one wall of said at least one cavity of the module, for example by projecting compressed air onto this wall, and simultaneously sucking away the matter thus detached.
